# EUROPÄISCHE PATENTANMELDUNG

(11) **EP 2 028 077 A2**
(43) Veröffentlichungstag der Anmeldung: **25.02.2009**
(21) Anmeldenummer: 08162412.4
(22) Anmeldetag: 14.08.2008
(51) Int. Cl.: B62B 5/06, B62B 9/08

(54) **Handgriff für eine Schiebestange oder einen Schiebebügel an einem Schiebefahrgestell oder an einem Lenker**

(30) Priorität: 22.08.2007 DE 202007011726 U
(71) Anmelder: TFK Trends for Kids GmbH Vertrieb von Kinder-Trend-Artikeln, 84030 Ergolding (DE)
(72) Erfinder: Beger, Udo, 84034 landshut (DE)
(74) Vertreter: Pröll, Jürgen

(57) **Zusammenfassung**

Die Erfindung betrifft einen Handgriff für eine Schiebestange oder einen Schiebebügel an einem Schiebefahrgestell oder an einem Lenker eines Zwei- oder Dreirades, aufweisend einen vorderen Teil und einen hinteren Teil, der von dem Daumen übergreifbar ist, wobei der Handgriff (1) eine Anformung (4) für die Auflage mindestens eines Teiles der Fläche einer Hand aufweist.

## Beschreibung

Die Erfindung betrifft einen Handgriff für eine Schiebestange oder einen Schiebebügel an einem Schiebefahrgestell oder an einem Lenker eines Zwei- oder Dreirades, aufweisend mindestens einen vorderen Teil, der von den Fingern von oben umgreifbar ist, und einen hinteren Teil.

Bei Kindersportwagen ist es bekannt, entweder einzelne Schiebestangen vorzusehen, an deren Enden jeweils ein abgewinkelter Abschnitt oder ein Griff winkelig abstehend vorgesehen ist, wobei der Abwinklungsteil als Griffteil ausgebildet ist und auf diesen beispielsweise ein Handgriff aus einem elastischen, gummiartigen Material aufgebracht ist. Bei anderen Ausführungen eines Kindersportwagens sind die beiden seitlichen Schiebestangen durch einen Schiebebügel miteinander verbunden. Dieser Schiebebügel kann in der Mitte geteilt und die Enden über eine Rastkupplung schwenkbar miteinander verbunden sein, um nach Lösen der Rastkupplung ein Zusammenlegen des Fahrgestells auch in seitlicher Richtung zu ermöglichen. Auch ist es bekannt, an dem Schiebebügel einen Handbremsgriff vorzusehen, bei dessen Betätigung eine Handbremsfunktion ausgeübt wird, so dass der Kinderwagen auch per Hand geschoben werden kann. Auf die Griffteile des Schiebebügels oder der Schiebestange werden die Handgriffe aufgeschoben, aufgeschrumpft oder daran befestigt, sofern dies erforderlich ist und die natürliche Reibhaftung nicht ausreichend ist, um den Handgriff gesichert zu halten. Es ist ferner auch bekannt, bei Lenkern für Zwei- oder Dreiräder auf die aus Rohrprofil bestehenden seitlichen Armen unter Kraftaufwendung gummierte Handgriffe aufzudrücken, die selbsthaltend ausgelegt und im Wesentlichen rund sind und unterschiedliche Oberflächenstrukturen aufweisen.

Es hat sich als Nachteil erwiesen, dass alle bekannten Handgriffe nur eine runde Form aufweisen, die das Umfassen mit den Fingern und Untergreifen mit dem Daumen nicht nur gestattet, sondern notwendig macht, um ein Schiebewagengestell, sei es ein Kinderwagen, ein Kindersportwagen, ein Puppenwagen, ein Einkaufswagen, ein Kofferwagen oder ein Zwei- oder Dreirad mit Lenker, gesichert schieben und auch fest- und zurückhalten zu können.

Insbesondere wenn eine schnellere Fortbewegung eines solchen Schiebefahrgestells vorgenommen wird, werden die beim Laufen oder schnellen Gehen durch den Körper erzeugten Pendelbewegungen auf die Handgriffe übertragen, so dass dadurch eine Pendelbewegung auf das Schiebefahrgestell übertragen wird und dieses auch seitlich ausbrechen kann. Bei einem Handgriff an einem Lenker besteht der Nachteil, dass eine ruhende Auflage der Hand nicht unterstützt wird.

Ausgehend von der dargestellten Problematik liegt der Erfindung die Aufgabe zugrunde, einen Handgriff der gattungsgemäßen Art so weiterzubilden, dass eine losere Kraftübertragung beim Schieben eines Schiebefahrgestells oder eines Zwei- oder Dreirades erzielbar ist und Pendelbewegungen des Körpers bei schnellerem Gehen oder Laufen nicht in eine Schlingerbewegung des Fahrgestells transferiert werden und die Hand entspannend auflegbar ist.

Die Erfindung löst die Aufgabe durch eine ergonomische Gestaltung des Handgriffes gemäß der in Anspruch 1 angegebenen technischen Lehre, wonach der Handgriff eine Anformung für die Auflage mindestens eines Teiles der Fläche einer Hand aufweist. Vorteilhafte Weiterbildungen der Erfindung sind in den Unteransprüchen im Detail angegeben.

Die Anformung kann an dem Handgriff selbst vorgesehen sein oder aber auch seitlich an dem Handgriff angeformt, und in etwa parallel hierzu verlaufend, vorgesehen sein. Auch in dieser Ausführung ist der Handgriff samt Anformung einteilig aus Kunststoff herstellbar.

Der hintere Teil des Handgriffes kann eine konvexe Handauflageanformung aufweisen, die sich gewölbt nach hinten und nach unten erstreckt und eine solche Form aufweist, dass mindestens die Handfläche einer Hand beim Auflegen flächig abstützbar ist.

Es versteht sich von selbst, dass die beiden links- und rechtsseitig angeordneten Handgriffe spiegelbildlich ausgebildet sein müssen, um diese Erfordernisse zu erfüllen. Es ist ferner ersichtlich, dass die bei der Fortbewegung übertragene Schiebekraft über die Fläche eine dämpfende Reibung erfährt. Wenn bei einem schnellen Schiebevorgang, z. B. im Laufschritt, die Kraft über die Fläche auf die Schiebestange oder den Schiebebügel übertragen wird, so verschiebt sich innerhalb der Handfläche die Handauflageanformung entsprechend der Pendelbewegung, so dass das Fahrgestell geradeaus fährt. Dennoch ist ein seitlicher Halt wie beim festen, vollständigen Umgreifen eines runden Griffes durch die Hand gegeben, so dass ein gerader Auslauf sichergestellt ist, ohne dass eine Schlingerbewegung des Fahrgestells erfolgt. Auch kann bei ebenem oder aufsteigendem Befahrgrund die Hand ausnehmend aufgelegt werden.

Die Handauflageanformung kann dabei je nach Wunsch nach hinten steiler oder weniger steil nach unten verlaufend vorgesehen sein. Ebenso ist die Ausformung auf mittlere Handgrößen, z. B. von Frauen, Kindern oder Männern, auszulegen, je nachdem, welche Person ein Schiebewagengestell häufig benutzt. Wenn darüber hinaus der Schiebebügel oder der Schiebegriff durch ein an der Schiebestange angebrachtes Schwenkgelenk in verschiedene Schrägstellungen gegenüber der Horizontalen verbringbar ist, empfiehlt es sich ferner, den Handgriff auf dem aufnehmenden Profilrohr des Schiebegriffes oder des Schiebebügels verdrehbar anzubringen. In einfachster Weise kann dies dadurch realisiert werden, dass ein Handgriff aus einem gummiartigen Material unter Spannung aufgrund der eigenen Federelastizität auf das Profilrohr aufgedrückt und durch Aufbringen eines erhöhten Drehmomentes auf dem Profilrohr verdreht wird. Bei anderen Ausführungen kann vorgesehen sein, dass eine Lagerung auf einer Hülse erfolgt, die relativ gegenüber dem Profilrohr verdrehbar angebracht ist, wobei entweder durch Reibelemente oder durch Arretierungselemente eine Feststellung in den verschiedenen Drehpositionen möglich ist, um eine angenehme optimale und individuelle Anpassung der Lage der Handauflageformung an die Handführung der nutzendenden Person zu erreichen.

Damit beispielsweise beim Bergabfahren ein sicherer Halt einer Hand an einem Handgriff an der Schiebestange eines Schiebefahrgestells oder an einem Schiebebügel gewährleistet ist, ist in weiterer Ausgestaltung der Erfindung vorgesehen, dass die Handauflageanformung einen Bereich aufweist, der ausgespart und/oder konkav für die Aufnahme mindestens eines Teiles des Daumenballens ausgeformt ist. Der Daumenballen liegt dann in einer Schale oder neben der Handauflageanformung, so dass mit dem Daumen der anschließende Abschnitt des hinteren Teils des Handgriffes untergriffen werden kann, während die Finger den vorderen Teil des Handgriffes übergreifen.

Damit die Finger am Handgriff geführt sind, ist in weiterer Ausgestaltung vorgesehen, dass der vordere Griffteil eingedrückte Dellen zur Führung der Finger beim Umgreifen aufweist. Solche Maßnahmen sind als solche bekannt. In gleicher Weise kann auch eine solche Delle am zweiten Teil für die Führung des Daumens vorgesehen sein.

Als besonders vorteilhaft hat sich die Ausbildung des Handgriffes auch in Verbindung mit einem Handbremsgriff für eine Bremseinrichtung in dem Fahrgestell für mindestens ein Laufrad herausgestellt. Der Handbremsgriff kann beispielsweise ebenfalls auf dem Profilrohr der Schiebestange oder des Schiebebügels angebracht sein, und zwar derart, dass er entweder von Links- oder Rechtshändern über der Fingerleiste des Handgriffes erfasst werden kann, mindestens mit zwei oder drei Fingern. Der Handbremsgriff, der verschwenkbar an einem Halter gelagert ist, der ebenfalls auf dem Profilrohr befestigt ist, steht in Wirkverbindung mit einem Bowden- oder Ketten- oder Stangenzug, um hierüber mit einer Bremseinrichtung im Fahrgestell, die auf ein oder mehrere Räder des Fahrgestelles wirkt, in Verbindung zu treten. Solche Handgriffe sind bekannt, wie beispielsweise aus der DE 20 2007 011 726. Neben der dort beschriebenen Ausführung mit einer speziellen Zugführung können selbstverständlich auch alle anderen Handbremsgriffe von Bremseinrichtungen zum Einsatz kommen.

Des Weiteren kann an der Schiebestange, dem Bügel oder dem Lenker in Reichweite des Daumens oder des Zeigefingers der Betätigungshebel einer mechanisch-akustischen oder die Taste einer elektrisch-akustischen Signaleinrichtung angebracht sein. Eine mechanisch-akustische Signaleinrichtung ist z. B. eine Fahrradklingel, die auch bei schnell laufenden Kinderwagengestellen zum Einsatz kommt. Eine solche Klingel kann beispielsweise auch an dem Halter des Handbremsgriffes oben- oder untenseitig angebracht sein. Anstelle einer mechanisch-akustischen kann auch eine elektrisch-akustische Signaleinrichtung, z. B. eine Hupe angebracht sein, die Taste hierfür befindet sich dann auch in Reichweite des Daumens oder des Zeigefingers und in unmittelbarer Nähe zum Handgriff. Dadurch ist es möglich, mit dem Daumen oder Zeigefinger diese Taste zu bedienen.

Der Handgriff kann grundsätzlich aus einem Kunststoff mit relativ glatter Oberfläche bestehen; er kann aber auch, um eine bessere Haftung zu erhalten, aus seinem gummiartigen Werkstoff bestehen. Hier sind alle bekannten Kunststoffe verwendbar, die für Handgriffe üblicherweise eingesetzt werden. Grundsätzlich kann die Handauflageanformung ein an sich ballenförmiges Teil sein. Um aber Gewicht zu sparen, empfiehlt es sich, die Handauflageanformung als schalenförmigen Hohlkörper auszubilden, der untenseitig Verstärkungsrippen aufweist, um eine hohe Stabilität beim Schieben und eine Kraftübertragung in Schieberichtung sicherzustellen.

Ein Schiebefahrgestell nach der Erfindung kann beispielsweise ein Kinder-, Puppen-, Einkaufs- oder Gepäckwagen, ein Zweirad, z. B. ein Fahrrad, ein Kinderfahrrad, ein Roller mit Muskelantrieb oder mit motorischem Antrieb, oder ein Dreirad für Kinder oder ein motorisiertes Dreirad mit einem Lenker sein.

Die Erfindung wird nachfolgend anhand der in den Zeichnungen dargestellten Ausführungsbeispiele ergänzend erläutert.

In den Zeichnungen zeigen:
- Fig. 1: eine Draufsicht auf einen Schiebebügel an den Schiebestangen eines Kinderwagengestells oder eines Schiebewagengestells,
- Fig. 2: eine Unteransicht des in Fig. 1 dargestellten Schiebebügels,
- Fig. 3: eine Variante der Ausbildung der Handauflageanformung an einem Handgriff,
- Fig. 4: eine weitere Variante der Handauflageanformung eines Handgriffes nach der Erfindung,
- Fig. 5: in einer teilperspektivischen Darstellung den in Fig. 4 in der Draufsicht dargestellten Handgriff eines Schiebebügels,
- Fig. 6: eine geschnittene Seitenansicht durch den Handgriff zur Verdeutlichung der Formgebung,
- Fig. 7: ein Beispiel einer Handauflage, die abgesetzt zum Handgriff angeordnet ist,
- Fig. 8: eine Seitenansicht eines Handgriffes mit Anformung nach Fig. 7 und
- Fig. 9: eine Lenkerstange mit seitlich unterschiedlichen, beispielhaft gezeichneten, Handgriffen mit Handauflagen.

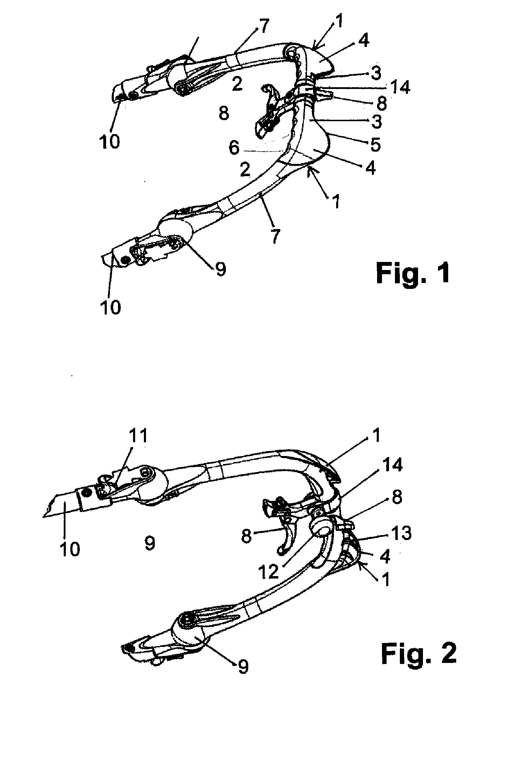

In den Figuren 1 und 2 ist ein Ausführungsbeispiel eines Schiebebügels 7 dargestellt, der mit seinen beiden Seitenschenkeln über feststellbare Rastgelenke 9 an Schiebestangen 10 befestigt ist. Die feststellbaren Rastgelenke 9 bestehen aus zwei Teilen, die miteinander durch eine Innenverzahnung verbunden sind, wobei die Innenverzahnung in bekannter Weise über eine Schiebevorrichtung in Eingriff und aus den Eingriff verbringbar ist. Dies geschieht über die Arretierungsmittel 11, die von Hand betätigbar sind. Der Schiebebügel 7 selbst besteht aus einem Profilrohr (z. B. Rundrohr), auf dem die Verbindungselemente und die Handgriffe 1 aufgebracht sind. Die Handgriffe 1 sind spiegelbildlich ausgebildet und in der Mitte beabstandet angeordnet, so dass ein Halter 14 eines Handbremsgriffes 8 an dem Profilrohr anmontierbar ist. Dieser Halter 14 ist ebenfalls dargestellt.

Die Handgriffe 1 bestehen gemäß der Erfindung aus einem vorderen Teil 2, der in seiner Formgebung als bekannt vorausgesetzt werden kann und dazu dient, um mit den Fingern umgriffen werden zu können. In dem vorderen Teil 2 des Handgriffes 1 sind auch Dellen 6 eingebracht, um die Finger besser führen zu können. Dies ist aber nicht unbedingt notwendig. Der Handgriff 1 weist ferner einen hinteren Teil 3 auf, an dem eine konvexe Handauflageanformung 4 vorgesehen ist, die sich gewölbt nach hinten und unten erstreckt, wie aus Fig. 2 in der Unteransicht deutlich sichtbar ist. Die Handauflageanformung 4 weist eine solche Form auf, dass mindestens die Innenfläche einer Hand beim Auflegen flächig abstützbar ist, d. h. dass die Handfläche mit einem großen Teil anliegt. In weiterer Ausgestaltung kann dabei vorgesehen sein, dass diese Ausformung so ausgebildet ist, dass sie nur die Innenhandfläche, nicht aber den Daumenballen unterstützt. In diesem Fall kann eine Ausnehmung 5 vorgesehen sein, in die der Handballen fällt, während der Daumen den schlankeren vorderen Teil von unten untergreift. Dadurch ist es möglich, mittels Daumen und Zeigefinger doch noch ein Umgreifen eines Teiles 3 des Handgriffes 1 vornehmen zu können, während auf dem anderen Teil die Handfläche sich auf der Handauflageanformung 4 abstützen kann. Es ist ersichtlich, dass beispielsweise mit der rechten Hand z. B. mit dem Zeige-, Mittel- und Ringfinger auch der Handbremsgriff 8 erfasst werden kann, wenn dies nötig ist, um die Bremseinrichtung des Fahrgestells zu bedienen.

Aus der perspektivischen Unteransicht in Fig. 2 ist zu sehen, dass die Handauflageanformung 4 als Hohlkörper ausgebildet ist und untenseitig Verstärkungsrippen 13 vorgesehen sind, um der Handauflageanformung 4 eine Stabilität zu geben und um die flächig angreifenden Schiebekräfte auf den Schiebebügel zu übertragen. Die Ausführungsform ist sehr leicht. Natürlich kann der Schiebebügel insgesamt auch aus Kunststoff gefertigt sein, so dass es nicht erforderlich ist, die Teile beispielsweise so zu gestalten, dass sie auf ein Profilrohr aufschiebbar sind. Ebenso kann die Ausbildung des Handgriffes 1 auch direkt an einem aus Metall bestehenden Profilrohr oder einem Schieber durch Anformen erfolgen. Fig. 2 zeigt ferner, dass an der Unterseite des Halters 14 eine Fahrradklingel als akustischer Signalgeber 12 vorgesehen ist, die über den Betätigungshebel 8 bedienbar ist. Dies kann beispielsweise ein Ziehhebel oder ein schwenkbarer Hebel sein. Dieser Hebel ist beispielsweise mit dem Daumen bedienbar.

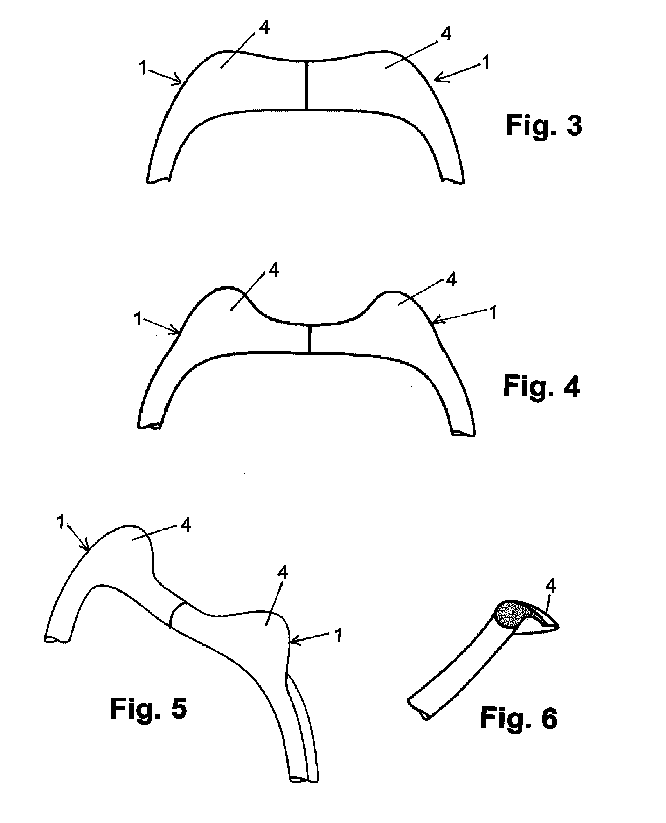

In den weiteren Figuren der Zeichnung sind Varianten dargestellt, beispielsweise zeigt Fig. 3 einen Schiebebügel 7 in der Draufsicht, der nicht eine Einschnürung für die Aufnahme des Daumenballens aufweist, sondern eine großflächigere Ausführung der Handauflageanformung 4. Eine solche Ausführung ist beispielsweise bei schnelllaufenden Kindersportwagen angebracht, um die Schubkräfte über die gesamte Fläche der Hand und des Daumenballens verteilt auf den Handgriff 1 zu übertragen.

Fig. 4 zeigt eine Variante, die ähnlich der in den Figuren 1 und 2 ist, jedoch ist hier ein Bremshandgriff nicht eingezeichnet. Im Übrigen sind aber die Handauflageanformungen 4 entsprechend denen in Fig. 1 und Fig. 2 ausgebildet. Dies ist auch in der teilperspektivischen Darstellung aus Fig. 5 zu ersehen.

Fig. 6 zeigt einen Teilschnitt durch den Handgriff mit der erfindungsgemäß ausgebildeten Handauflageanformung 4, um die Formgebung zu verdeutlichen.

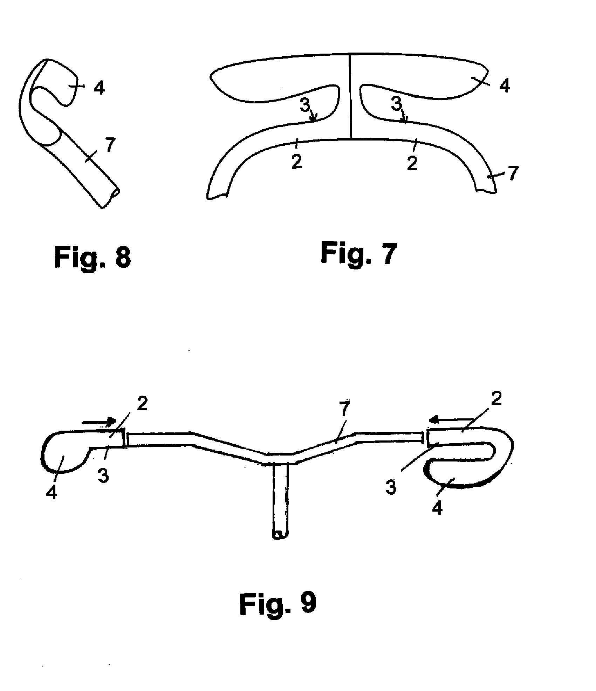

In den Figuren 7 und 8 ist ein weiteres Beispiel einer Handgriffausführung mit Anformung dargestellt. Auf den Bügel 7 sind zwei Handgriffe, bestehend aus einem vorderen Teil 2 und einem hinteren Teil 3, aufgezogen bzw. an diesem befestigt, oder bilden als Formteil den Bügel. Spiegelbildlich sind an dem hinteren Teil Anformungen 4 in Form von Flügeln vorgesehen, die in einem solchen Abstand zum Handgriff verlaufen, dass darauf mindestens der hintere Handrücken sich abzustützen vermag. Auch diese Anformungen 4 gestatten es, dass die Kraftübertragung beim Schieben hierüber erfolgt. Aus der schematischen Schnittzeichnung in Fig. 8 ist die Flügelform in der Seitenansicht ersichtlich, insbesondere auch die gebogene, konvexe Ausführung.

In Fig. 9 ist eine Lenkerstange dargestellt, die praktisch Bügelform 7 besitzt. Auf die seitlichen Enden der Lenkerstange können die Handgriffe, bestehend aus den vorderen Teilen 2 und hinteren Teilen 3, aufgepresst werden. Der rechte Handgriff weist eine parallele Handauflageanformung 4 auf, der linke Handgriff eine direkte Anformung 4, wie sie anhand der Figuren 1 bis 6 beschrieben ist.

Die Erfindung ist nicht nur auf die dargestellten Ausführungsbeispiele eines Handgriffs eines Schiebebügels beschränkt. Solche Handgriffe können Selbstverständlich als Einzelhandgriffe auch an die Schiebestangen eines Buggys angebracht werden, der seitlich zwei Handgriffe aufweist. Sie können aber auch als Handgriffe an den Lenker eines Zwei- oder Dreirades angebracht sein, wie bereits beschrieben.

### Bezugszeichenliste

- 1: Handgriff
- 2: vorderes Teil
- 3: hinteres Teil
- 4: Handauflageanformung
- 5: Bereich
- 6: Dellen
- 7: Bügel
- 8: Handbremsgriff
- 9: feststellbares Rastgelenk
- 10: Schiebstange
- 11: Arretierungsmittel
- 12: akustische Signalgeber
- 13: Verstärkungsrippe
- 14: Halter

## Patentansprüche

1. Handgriff (1) für eine Schiebestange (10) oder einen Schiebebügel (7) an einem Schiebefahrgestell oder an einem Lenker eines Zwei- oder Dreirades, aufweisend mindestens einen vorderen Teil (2), der von den Fingern von oben umgreifbar ist, und einen hinteren Teil (3), der von dem Daumen untergreifbar ist, **dadurch gekennzeichnet, dass** der Handgriff (1) eine Anformung (4) für die Auflage mindestens eines Teiles der Fläche einer Hand aufweist.

2. Handgriff nach Anspruch 1, **dadurch gekennzeichnet, dass** die Anformung (4) hinter dem Handgriff (1) unter Bildung eines Zwischenspaltes verläuft und so ausgebildet ist, dass mindestens ein Teil der Handfläche abgestützt ist.

3. Handgriff nach Anspruch 1, **dadurch gekennzeichnet, dass** der hintere Teil (3) eine konvexe Handauflageanformung (4) aufweist, die sich gewölbt nach hinten und nach unten erstreckt und eine solche Form aufweist, dass mindestens die Innenfläche einer Hand beim Auflegen flächig abstützbar ist.

4. Handgriff nach einem der vorhergehenden Ansprüche, **dadurch gekennzeichnet, dass** die Handauflageanformung (4) einen seitlichen Bereich (5) aufweist, der ausgespart und/oder konkav zur Aufnahme mindestens eines Teils des Daumenballens ausgeformt ist.

5. Handgriff nach einem der vorhergehenden Ansprüche, **dadurch gekennzeichnet, dass** die Handauflageanformung (4) in einem bestimmten Winkel zur Oberkante gewölbt, sich schräg nach unten erstreckend verläuft, derart, dass die Übertragung der Schiebekräfte flächig auf die Handauflageanformung (4) erfolgt.

6. Handgriff nach einem der vorhergehenden Ansprüche, **dadurch gekennzeichnet, dass** der vordere Griffteil (2) eingedrückte Dellen (6) zur Führung der Finger beim Umgreifen aufweist.

7. Handgriff nach Anspruch 1 oder 3, **dadurch gekennzeichnet, dass** der hintere Teil (3) einen Abschnitt aufweist, der von dem Daumen untergreifbar ist.

8. Handgriff nach Anspruch 7, **dadurch gekennzeichnet, dass** an der Unterseite des hinteren Teils (3) eine Delle (6) zur Führung des Daumens vorgesehen ist.

9. Handgriff nach Anspruch 1 oder 3, **dadurch gekennzeichnet, dass** an der Schiebestange (10), dem Bügel (7) oder dem Lenker ein Handbremsgriff (8) für eine Bremseinrichtung in dem Fahrgestell für mindestens ein Laufrad vorgesehen ist, wobei der Handbremsgriff so positioniert ist, dass er mit mindestens dem Zeige- und dem Mittelfinger ergreifbar ist.

10. Handgriff nach Anspruch 1 oder 3, **dadurch gekennzeichnet, dass** an der Schiebestange (10), dem Bügel (7) oder dem Lenker in Reichweite des Daumens oder des Zeigefingers der Betätigungshebel einer mechanisch betätigbaren oder die Taste einer elektrisch betätigbaren Signaleinrichtung (12) angebracht ist.

11. Handgriff nach einem der vorhergehenden Ansprüche, **dadurch gekennzeichnet, dass** der Handgriff (1) aus Kunststoff oder einem gummiartigen Werkstoff besteht.

12. Handgriff nach Anspruch 1 oder 3, **dadurch gekennzeichnet, dass** die Handauflageanformung (4) als schalenförmiger Hohlkörper ausgebildet ist und unten- und innenseitig Verstärkungsrippen (13) aufweist.

13. Handgriff nach Anspruch 1 oder 3, **dadurch gekennzeichnet, dass** der Handgriff (1) auf einem Profilrohr der Schiebestange (10) oder des Schiebebügels (7) drehbar und in verschiedenen Drehpositionen feststellbar oder in verschiedenen Drehstellungen selbstklemmend gelagert ist.

14. Handgriff nach Anspruch 1 oder 3, **dadurch gekennzeichnet, dass** das Schiebefahrgestell ein Kinder-, Puppen-, Einkaufs- oder Gepäckwagen und das Zweirad ein Fahrrad, ein Kinderfahrrad, ein Roller mit Muskelantrieb oder mit motorischem Antrieb oder ein Dreirad für Kinder oder ein motorisiertes Dreirad mit einem Lenker ist.
